# EUROPEAN PATENT APPLICATION

(11) **EP 2 116 360 A1**
(43) Date of publication of application: **11.11.2009**
(21) Application number: 08155972.6
(22) Date of filing: 09.05.2008
(51) Int. Cl.: B29C 70/76, B29C 63/00, B29C 70/46, B29C 70/44

(54) **Method for combination of a thermoset composite and a thermoplastic for edge sealing of distinct forms**

(71) Applicant: Quatee AS, 8001 Bodø (NO)
(72) Inventor: Johannessen, Egil, H., N-3270 Larvik (NO); Wiik, Tor, Henning, N-8015 Bodø (NO)
(74) Representative: Onsagers Ltd

(57) **Abstract**

The invention provides a method for edge sealing and products with sealed edges. It relates to distinct forms made from a combination of a thermoset (2) and thermoplastic (1). The steps of the method include consolidating the thermoset (2), placement of the thermoplastic (1) and final curing. Edges from distinct forms from thermosets can often be sharp and by application of a protective layer of a thermoplastic, the edges can be smoothened and also be strengthened. The method provides a securely and enduring combination of thermoset and thermoplastic in distinct forms.

## Description

The present invention regards a method with combination of thermoset and thermoplastic for distinct forms with edge sealing and products made with edge sealing.

### BACKGROUND

Combinations of different types of plastics are used in order to optimize the properties of the products. The combination of thermosets and thermoplastics shows many advantages since their properties complement each other.
In application areas such as contact sports and orthopaedics, products are required to protect and support the shape of the body. In contact sports such as American football, soccer, land hockey, ice hockey, etc, there are often physical impacts. Injuries following such impacts are common and can be severe and in many sports is it obligatory to use protective equipment such as shin pads, shoulder pads, knee pads, or other protection devices. In orthopaedics, products are required to support parts of the body which are for example disordered, harmed or weakened due to illness or injuries. For some kinds of labour there is also a need for protecting certain parts of the body to prevent injuries.
For these kinds of applications areas, plastics can be successfully combined to give optimal properties.
These types of products are often cut out of a larger piece of material and the edges may be sharp, irregular and have splints, which will be uncomfortable for the user. The edges of the protective devices have thus turned out to be a challenge for the manufacturer.

### PRIOR ART

In EP 0707 032 the combination of a thermoset core with thermoplastic particles on its outsides has given significantly increased toughness and improved resistance due to formation of a continuous layer by curing. The thermoplastic is specified to consist of particles of 2-100 µm. The composite is achieved by curing of the applied thermoplastic particles on the thermoset resin.
EP0392914 discloses the arrangement of 3 layers in a tubular structure. The outer layer consists of fibres encapsulated in a thermosetting matrix, the first inner coating of fibrous composite material with a thermoplastic binder and the second inner coating of thermoplastic material consisting essentially of polyamide. Thus this relates to a specific composition aimed for specific tubular structures.

### OBJECTIVE

The objective of the present invention is to provide a method for production of a combination of thermoset composites and thermoplastics for distinct forms where the edges are protected. Another objective of the present invention is to provide products with distinct forms with edge sealing made from thermoset composites and thermoplastics.
The objectives of the invention may be obtained by the features as set forth in the following description of the invention and/or in the appended patent claims.

### DESCRIPTION

The method according to the invention of combination of a thermoset composite and a thermoplastic for edge sealing comprises the steps of consolidating a thermoset composite laminate, placing the thermoplastic at least on the edges, and curing the thermoset composite and the thermoplastic to obtain a close adhesion of the thermoplastic to the thermoset composite.
The product according to the invention comprises a combination of thermoset composite and thermoplastic and has at least edges which are sealed by the thermoplastic. Thus, the product has smoothened and strengthened edges which will comfort the user.
The thermoset composite may be a carbon fibre or aramide reinforced epoxy composite, or any other suitable thermoset composite. Thermoset composites are those that change irreversibly under the influence of heat from a fusible and soluble material into one which is infusible and insoluble through the formation of a covalently cross-linked, thermally stable network (term from "Billmeyer: Textbook of Polymer Science by Wiley & Sons, 3. edition, 1984). In contrast, thermoplastic polymers soften and flow when heat and pressure are applied, the changes being reversible. The thermoplastic polymer may be a polyolefin e.g. cross-linked polyethylene, rubber, elastomer, polystyrene, acrylic polymer, polyvinyl ester, chlorine- containing polymer, polyamide and combinations thereof.
The thermoplastic can for example have the form of a sheet or be in injected viscous form.
Consolidating relates to preparing the parts of the thermoset in such a manner that the thermoplastic can be added to a thermoset form. For example more than one layer of composite weave is placed on a model and assembled under use of e.g. pressure, heat or additives. Consolidating may fully or partly comprise pre-curing.
Pre-curing relates to a not-finalized curing process such that the mechanical properties of the product under curing are still not fully developed. A pre-curing cycle is clearly shorter than a complete curing cycle where obviously all covalent cross-linking has taken place in the thermoset matrix. Pre-cured and thus partly cross-linked, the thermoset composite is geometrically somewhat stabilized compared to its uncured condition and can be taken off its pre-forming tool and can be handled and plasticized/reshaped with little risk of negatively affecting final mechanical properties.

Pre-curing can for example be achieved by infra-red heaters, in an autoclave or in a curing oven.
Placement of the thermoplastic at least on the edges is done on one or both sides of the pre-cured thermoset composite. Also it may be placed between thermoset laminate plies. The thermoplastic may extend beyond the edges of the thermoset, and may cover the thermoset fully or partially.
Curing of thermoset composite and thermoplastic takes place under a consolidating pressure and under elevated temperature either in a closed matched cavity tool or by means of vacuum-bag consolidation. For a product consisting of pre-cured epoxy/carbon fibre with thermoplastic edges made from polyethylene copolymer the pressure would typically be 0,6 MPa and the cure temperature would typically reach a maximum of 135 °C. Optimal conditions can easily be found by the person skilled in the art.
Trimming of the shell edges can be done by conventional methods as for example applied for cutting of thermoplastics.
A distinct form is defined by the presence of edges in relatively closeness to the body of the product and can be understood in contradiction to continuous forms such as tubes, films and plates where the edges are not close to the body of the product or an essential part of the product.

LIST of figures
Fig. 1 shows the steps of the method of the present invention
Fig. 2 shows an illustration of a product for leg protection as produced by the method of the present invention

### DETAILED DESCRIPTION

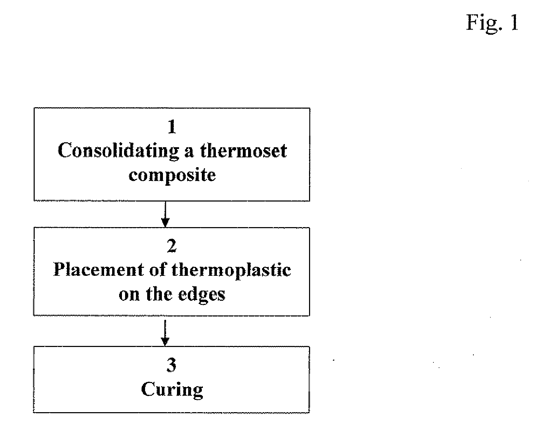

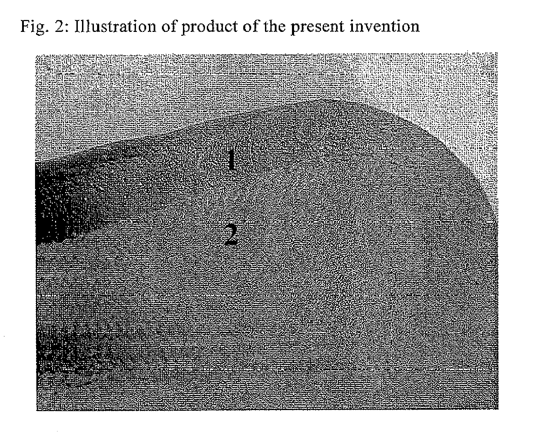

The steps of the method are described below in more detail with no intention to limit the present invention with the steps according to figure 1.
1. Forms of thermoset composites are produced by means of any suitable method, for example by moulding, or forming. For forming, for example in vacuum forming the following steps can for example be used: A model of the form or object to be moulded is manufactured in for example tooling block material.
   Strips of dry material e.g. of composite or textile are placed on the model of the object with in connection with a vacuum outlet in the working table. A sheet of release film is placed over the model and tightly taped down to the working table.
   Vacuum is applied to drape the film towards the model. A number of prepreg layers are cut into the desired shape of the model and placed on top of the now release film covered model. Yet one sheet of release film is placed on top of the areas with prepreg laminate. A sheet of Breather, for example polyester fleece is placed on top of the model. A framed silicone membrane is placed over the model and vacuum is applied in order to consolidate the prepreg laminate.
2. Thermoplastics are placed at least on the edges. For example foils of polyethylene copolymer can be placed on both sides of the objects. The thermoplastics may be placed only at the edges, or may stretch out to cover a larger area of the thermoset forms.
3. Curing can for example be done in a vacuum bag process where the foils melt and are pressed towards the composite. Optionally, the edges are trimmed by suitable means after curing, e.g. by manual trimming by means of knifes.
   One example of a product achieved by the present invention is illustrated in fig. 2, where 1 shows the sealed edge of the product and 2 shows the body of the product.
   For further manufacturing several steps can optionally be added according to the intended use of the product, e.g. attachment of padding material, foam, and straps for products for personal protection devices.
   The present invention will be further described by the following example of producing a shell with edge sealing.

### Example 1: Modification of edges of a thermoset shell

- A shell was produced from carbon-fibre reinforced epoxy by vacuum forming by the following steps. Strips of glass weave were placed on the models of the object with a vacuum outlet. A sheet of release film A6000 blue 12 micron non-perforated was placed over the model. Vacuum of 90 mbar was applied to drape the film towards the model. Several layers of VTM264 CFO/300 Rw 42% were cut into the desired shape of the model and placed on top of the model. One sheet of release film was placed on top of the model. A sheet of polyester fleece was placed on top of the model. Then the silicone frame was closed and vacuum was applied with 90 mbar and maintained for 2 minutes.
- The shell was trimmed to an angle of 45° from the inside and flat on the outside by use of a knife.
- Two sheets of cross-linked polyethylene (Nucrel) were cut to a form that follows the edges of the un-cured shell.
- For curing the composite shell with covered edges was positioned in an autoclave at temperature 120 °C for 90 minutes and with a pressure of 0.3 MPa.
- The pressure was released; the shell was de-moulded and cooled by air.
- The edges were trimmed 3 mm outside the composite shell by use of a knife.

## Claims

1. Method for combination of a thermoset composite and a thermoplastic for edge sealing of distinct forms,
**characterized in that** it comprises the steps of:
- consolidating the thermoset composite,
- placing the thermoplastic at least on the edges, and
- co-curing the thermoset composite and the thermoplastic to obtain a close adhesion of the thermoplastic to the thermoset composite.

2. Method according to claim 1,
**characterized in that** the thermoset composite is a carbon fibre reinforced epoxy composite.

3. Method according to claim 1,
**characterized in that** the thermoset composite is a aramide fibre reinforced epoxy composite.

4. Method according to any of the preceding claims,
**characterized in that** the thermoplastic is one of polyolefin e.g. cross-linked polyethylene, rubbers, elastomers, polystyrenes, acrylic polymers, polyvinyl esters, chlorine- containing polymers, polyamides or combinations thereof.

5. Method according to claim 4,
**characterized in that** the thermoplastic is a polyolefin or a combination of different types of polyolefins.

6. Method according to claim 5,
**characterized in that** the thermoplastic is cross-linked polyethylene.

7. Method according to claim 1,
**characterized in that** the method comprises a subsequent trimming of the edges.

8. Method according to claim 1,
**characterized in that** the form is intended to protect or support a body of a user comprising at least one element and fixing members for fixing the element(s) to the body of the user.

9. Method according to claim 1-8,
**characterized in that** consolidating comprises pre-curing of the thermoset composite.

10. Product with distinct form comprising a combination of a thermoset composite and thermoplastic,
**characterized in that** it comprises edge sealing.

11. Product according to claim 10,
**characterized in that** the thermoset composite is a carbon fibre reinforced epoxy composite.

12. Product according to claim 10,
**characterized in that** the thermoset composite is a aramide fibre reinforced epoxy composite.

13. Product according to claim 10,
**characterized in that** the thermoplastic is a polyolefin e.g. cross-linked polyethylene, rubbers, elastomers, polystyrenes, acrylic polymers, polyvinyl esters, chlorine- containing polymers, polyamides or combinations thereof.

14. Product according to claim 13,
**characterized in that** the thermoplastic is a polyolefin or a combination of different types of polyolefins.

15. Product according to claim 14,
**characterized in that** the thermoplastic is cross-linked polyethylene.

16. Product according to claim 10,
**characterized in that** it is intended to protect or support a body of a user comprising at least one element and fixing members for fixing the element(s) to the body of the user.
